# FASCICULE DE BREVET EUROPEEN

(11) **EP 1 707 647 B1**
(45) Date de publication et mention de la délivrance du brevet: **12.03.2008**
(21) Numéro de dépôt: 06290530.2
(22) Date de dépôt: 03.04.2006
(51) Int. Cl.: C23C 8/32, F16C 33/64, F16C 33/41, F16C 33/38, C21D 9/40

(54) **Roulements à bague renforcée comprenant une cage pourvue d'un déflecteur**
Lager mit Verstärktem Ring und Käfig mit Deflektor
Bearing with reinforced ring comprising a cage with deflector

(30) Priorité: 01.04.2005 FR 0503251
(43) Date de publication de la demande: 04.10.2006
(73) Titulaire: S.N.R. ROULEMENTS, 74000 Annecy (FR)
(72) Inventeur: Lornage, Sandrine, F-42160 Andrezieux Boutheon (FR); Lonchambon, Hervé, F-74540 Gruffy (FR); Simon, Thibault, F-74000 Annecy (FR); Mermoud, Gérard, F-74330 La Balme de Sillingy (FR)
(74) Mandataire: Breese, Pierre

(56) Documents cités:
- EP-A- 0 626 468
- EP-A- 1 355 071
- FR-A- 2 787 530
- US-B1- 6 423 158
- US-B1- 6 592 684

## Description

L'invention concerne un roulement comprenant une bague intérieure, une bague extérieure et des corps roulants guidés dans une cage de sorte à permettre la rotation relative desdites bagues.

L'invention s'applique typiquement à des roulements de boîte de vitesses pour véhicule automobile, lesdits roulements étant lubrifiés par le lubrifiant utilisé pour ladite boîte. En effet, en fonctionnement, la présence du lubrifiant de la boîte est nécessaire dans l'espace formé entre les bagues pour assurer la durée de vie du roulement.

Pour permettre cette lubrification, on connaît, notamment du document FR-A1-2 787 530, d'utiliser une cage qui comprend au moins un déflecteur qui est disposé dans le roulement de sorte à permettre le passage du lubrifiant depuis la boîte vers l'espace formé entre les bagues.

Un problème qui se pose est que le lubrifiant de la boîte de vitesses comprend des particules solides provenant en particulier de la phase de rodage de la boîte. L'espace formé entre les bagues est alors soumis à une pollution par ces particules solides qui, lors de la rotation, induisent l'apparition de défauts de surface appelés indents. En pratique, ces défauts de surface provoquent une détérioration de la pièce dans le temps sous l'effet des contraintes subies lors de l'utilisation, ce qui est notamment préjudiciable à la durée de vie du roulement.

Pour limiter ce problème, on pourrait envisager de disposer un joint de sorte à empêcher les particules solides de pénétrer dans l'espace formé entre les bagues. Toutefois cette solution conduit également à une diminution de la quantité de lubrifiant introduit dans l'espace, ce qui n'est pas souhaitable pour le bon fonctionnement du roulement.

L'invention vise à résoudre les problèmes mentionnés ci-dessus de sorte à proposer des roulements notamment de boîte de vitesses qui puissent être lubrifiés de façon optimale tout en présentant une durée de vie améliorée, notamment vis-à-vis de la présence des particules solides.

Pour ce faire, la demanderesse propose de renforcer au moins une bague du roulement de sorte à allier la dureté de surface de la bague à sa capacité à conserver l'intégrité de celle-ci vis-à-vis des contraintes mécaniques et thermiques subies.

A cet effet, l'invention propose un roulement selon la revendication 1.

D'autres objets et avantages de l'invention apparaîtront au cours de la description qui suit, faite en référence aux dessins annexés, dans lesquels :
- la figure 1 est une vue en coupe longitudinale d'un roulement selon un premier mode de réalisation de l'invention dans lequel une cage est prévue ;
- la figure 2 est une vue en perspective de la cage du roulement de la figure 1 ;
- la figure 3 est une vue partielle en coupe longitudinale d'un roulement selon un deuxième mode de réalisation de l'invention dans lequel deux cages sont prévues de chaque côté du roulement ;
- les figures 4 et 5 sont des vues partielles en coupe des cages de la figure 3 qui illustrent respectivement leur engagement (figure 4) et leur verrouillage (figure 5) ;
- la figure 6 est une vue partielle en coupe longitudinale d'un roulement selon un troisième mode de réalisation de l'invention dans lequel deux cages sont prévues de chaque côté du roulement
- la figure 7 est une vue en perspective des deux cages du roulement de la figure 6 qui sont disposées en vis-à-vis avant encliquetage.

On décrit ci-dessous un roulement qui est notamment utilisé pour permettre le guidage en rotation d'un arbre d'une boîte de vitesses pour véhicule automobile.

Le roulement comprend une bague intérieure 1, une bague extérieure 2 et des corps roulants 3 disposés dans l'espace formé entre lesdites bagues de sorte à permettre la rotation relative desdites bagues. Dans les modes de réalisation représentés, les corps roulants 3 sont des billes mais l'invention n'est nullement limitée à cette caractéristique. En outre, la bague extérieure 2 comprend une gorge supérieure 2a destinée à recevoir un anneau d'arrêt permettant d'immobiliser la bague extérieure 2 et de positionner le roulement dans la boîte de vitesses.

Pour assurer le guidage en rotation des corps roulants 3, il est connu d'utiliser au moins une cage 4 qui comprend un corps généralement annulaire. Le corps comprend en outre des logements 5 dans lesquels les corps roulants 3 sont disposés.

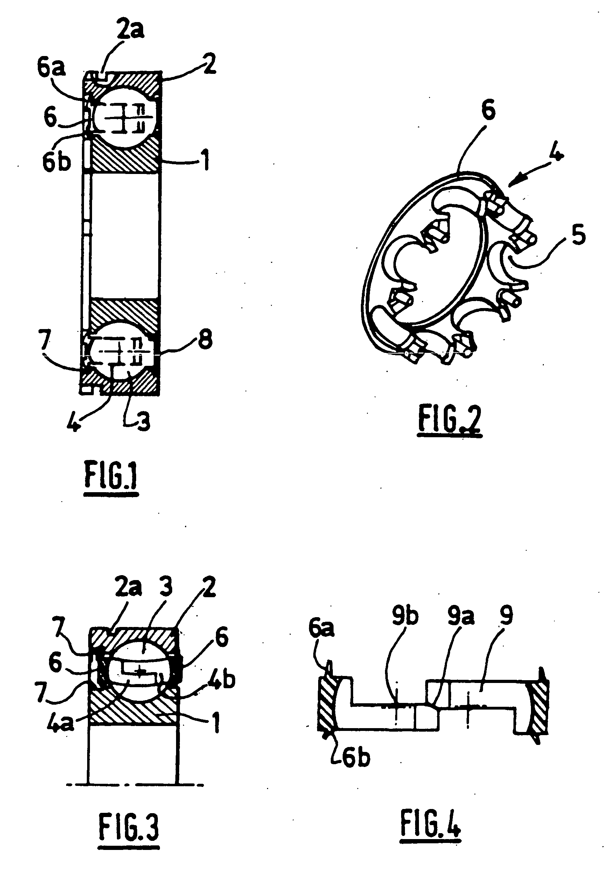

Selon le premier mode de réalisation des figures 1 et 2, le roulement comprend une cage 4 dont le corps est pourvu de logements 5 en forme de calotte hémisphérique débouchant sur un bord transversal dudit corps, l'autre bord du corps comportant un déflecteur annulaire 6 s'étendant généralement radialement.

Ce type de cage 4, notamment décrit dans le document FR-A1-2 787 530, peut être obtenu par moulage d'une seule pièce, par exemple en matière plastique thermoplastique, notamment en polyamide renforcé par des fibres de verre.

Le déflecteur 6 est prévu pour être disposé dans le roulement en regard d'une face latérale de l'espace formé entre les bagues 1, 2. En particulier, la disposition relative du déflecteur 6 et des bagues 1, 2 est prévue pour permettre le passage d'un fluide de lubrification depuis l'extérieur du roulement vers l'espace formé entre les bagues 1, 2, tout en limitant la pénétration de la pollution du milieu ambiant à l'intérieur de l'espace formé entre les bagues 1, 2.

Dans le premier mode de réalisation représenté, le déflecteur 6 comprend deux lèvres identiques 6a, 6b qui s'étendent respectivement en regard de chacune des bagues 2, 1. Plus particulièrement, la lèvre extérieure 6a est disposée dans un embrèvement annulaire 7 formée dans la face latérale de la bague extérieure 2. Pour permettre le passage du lubrifiant à ce niveau, il est prévu un jeu fonctionnel entre le fond de l'embrèvement 7 et la face avant de la lèvre 6a. En particulier, le jeu fonctionnel est réalisé en mettant en contact glissant la lèvre 6a contre la bague 2, ce qui, du fait des tolérances de ces côtes, permet le passage du lubrifiant.

Concernant la lèvre intérieure 6b, elle est disposée en regard de la face latérale de la bague intérieure 1 avec un jeu fonctionnel permettant le passage du lubrifiant. Cette réalisation, en supprimant la réalisation d'un embrèvement, permet de réduire la dimension axiale de la bague intérieure 1 ce qui, dans l'optique de l'utilisation du roulement dans une boîte de vitesses, est un avantage appréciable du fait de l'importance des contraintes d'encombrement. En outre, le poids du roulement se trouve également réduit. Enfin, l'usinage ultérieur de la bague 1 en est simplifié du fait de la suppression de la réalisation de l'embrèvement. En variante de cette réalisation, on peut prévoir d'augmenter la taille des corps roulants 3 de sorte à augmenter la capacité du roulement, et ce sans augmenter la dimension axiale de celui-ci.

Au niveau de la face latérale de l'espace qui est opposée au déflecteur 6, le premier mode de réalisation prévoit de disposer un joint d'étanchéité 8 emmanché à l'intérieur d'une bague, par exemple comprenant une armature rigide et une lèvre surmoulée qui vient en appui sur la bague opposée.

Dans le deuxième mode de réalisation représenté sur les figures 3 à 5, le roulement comprend deux déflecteurs 6 disposés respectivement en regard de chacune des faces latérales de l'espace formé entre les bagues 1, 2. Le déflecteur 6 comprend également deux lèvres 6a, 6b qui s'étendent respectivement en regard de chacune des bagues 2, 1.

On prévoit deux cages 4a, 4b pourvues chacune d'un déflecteur 6, lesdites cages étant associées entre elles par des moyens d'accrochage réciproque. Dans le mode de réalisation représenté, chaque cage 4a, 4b comprend des griffes axiales d'accrochage 9 qui sont prévues dans le prolongement des logements 5 de sorte à assurer l'association des deux cages 4a, 4b par encliquetage lors de leur déplacement axial en vis-à-vis. Ce type de cage, outre la possibilité de bénéficier d'un déflecteur 6 de chaque côté du roulement, permet d'augmenter la capacité de guidage des corps roulants 3.

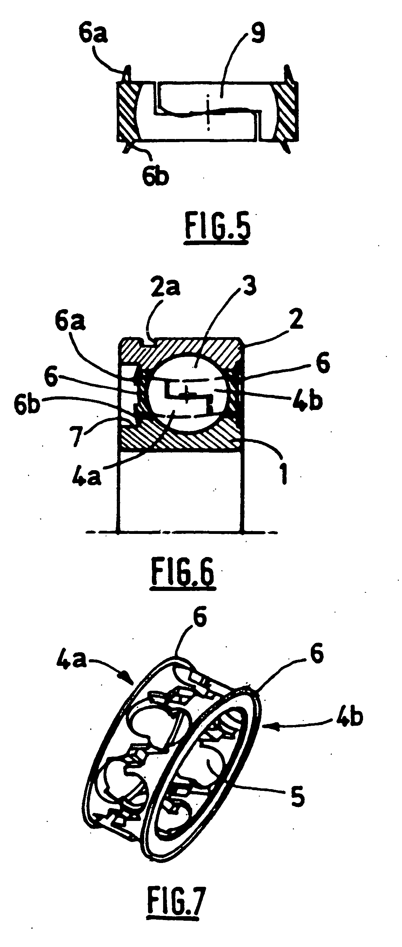

Comme représenté sur les figures 4 et 5, les griffes 9 sont agencées pour venir en appui radialement l'une sur l'autre de sorte à assurer l'association. Plus particulièrement, les griffes 9 sont de forme conique et comprennent une partie extrême pourvue d'un chanfrein 9a qui guide l'appui radial des griffes 9 lors de leur déplacement axial d'encliquetage (figures 4). En outre, la face d'appui de la griffe 9 comporte une contre dépouille 9b qui supprime le risque de désencliquetage. Cette réalisation permet, en déplaçant radialement les griffes 9 lors de leur chevauchement, d'obtenir un serrage radial entre les griffes 9 qui est plus important, et donc une association plus fiable des cages 4a, 4b entre elles, notamment au niveau des contre dépouilles 9b (figure 5). Ainsi, les risques d'éjection d'une cage 4a, 4b lors de la rotation sont supprimés.

Dans le mode de réalisation représenté, les deux cages 4a, 4b, et donc les deux déflecteurs 6 sont identiques. On peut toutefois prévoir d'utiliser deux cages différentes, notamment au niveau de la géométrie de leur déflecteur.

Sur la figure 3, la lèvre extérieure 6a est sensiblement radiale alors que la lèvre intérieure 6b est légèrement inclinée axialement dans la direction opposée à l'espace formé entre les bagues.

En outre dans le deuxième mode de réalisation, les faces avant des bagues intérieure 1 et extérieure 2 comprennent un embrèvement 7 dans lequel chacune des lèvres 6a, 6b est disposée avec un jeu fonctionnel sensiblement axial. Au niveau de la face arrière de l'espace prévu entre les bagues, la lèvre supérieure 6a est disposée en regard de la face latérale de la bague extérieure 2, et la lèvre intérieure 6b est disposée en regard de la face supérieure de la bague intérieure 1.

Dans le mode de réalisation représenté en relation avec les figures 6 et 7, les deux lèvres 6a, 6b sont identiques et sensiblement radiales. Elles sont disposées dans respectivement un embrèvement 7 avec un jeu fonctionnel sensiblement axial.

Les modes de réalisation décrits ci-dessus permettent, en utilisant des cages 4 de conception simple, d'obtenir une lubrification satisfaisante de l'espace formé entre les bagues 1, 2.

L'invention prévoit de combiner l'utilisation d'une cage 4 telle que définie ci-dessus avec un renforcement particulier d'au moins une bague 1, 2 du roulement de sorte à limiter les détériorations induites par les particules solides pouvant être présentes dans le lubrifiant.

Selon une réalisation, seule la bague intérieure 1 est renforcée de façon particulière. En variante, on peut prévoir que la bague extérieure 2 soit également renforcée. En particulier, le renforcement doit être prévu au niveau des pistes de roulement des bagues, sur lesquelles les corps roulants 3 se déplacent, puisque les détériorations induites par les particules solides sont plus particulièrement localisées à ce niveau. Ainsi, en limitant les dégâts occasionnés par le passage des polluants solides dans le contact formé entre la piste de roulement et le corps roulant, la durée de vie du roulement en est améliorée.

Selon l'invention, la bague 1, 2 est réalisée dans un acier riche en carbone, c'est-à-dire comprenant entre 0,75% et 1,1 % en poids de carbone. En outre, les aciers utilisés peuvent inclure au moins un élément d'alliage pris dans le groupe comprenant le Silicium, le Phosphore, le Molybdène, le Manganèse, le Chrome, le Soufre, le Nickel, le Vanadium, l'Aluminium, le Cuivre, le Tungstène, le Titane, le Cobalt, le Plomb, le reste étant du Fer. En particulier, l'acier est de type 100Cr6 qui permet de résister à des charges importantes, tant statiques que dynamiques.

Selon une réalisation, le renforcement est obtenu par un procédé permettant d'améliorer les propriétés mécaniques de surface de la bague 1, 2, notamment sa dureté et sa capacité à conserver son intégrité, ledit procédé faisant l'objet d'un dépôt d'une demande de brevet réalisé le même jour que celui de la présente.

En particulier, le procédé de renforcement permet d'améliorer la résistance à l'indentation et de limiter les dégradations générées dans le temps par des contraintes mécaniques et thermiques superficielles, notamment au niveau des indents, ce qui permet de conserver l'intégrité de la surface dans le temps.

Le procédé de renforcement prévoit une étape de carbonitruration de la bague 1, 2. De façon connue, la carbonitruration permet d'enrichir en azote et en carbone notamment la zone de surface par diffusion en phase austénitique. En particulier, les conditions de l'étape de carbonitruration peuvent être fixées de sorte que la zone de surface comprenne une quantité moyenne d'azote d'au moins 0,2 % en poids dans de l'austénite.

Selon un mode de réalisation, l'étape de carbonitruration est réalisée en phase gazeuse dans un four avec les conditions suivantes :
- atmosphère comprenant au moins du monoxyde de carbone, du dihydrogène et de l'azote gazeux ;
- temps compris entre 1 et 10 heures ;
- température comprise entre 800°C et 920°C ;
- potentiel carbone compris entre 0,90 et 1,26.

Dans un exemple de réalisation, l'atmosphère est formée à partir d'un gaz support obtenu par craquage d'un mélange azote - méthanol, d'ammoniac et d'un gaz additionnel contenant des alcanes, lesdits gaz étant introduits séparément dans le four.

Notamment pour la carbonitruration d'un acier de type 100Cr6, les conditions de carbonitruration utilisées sont : température comprise entre 830°C et 880°C ; temps compris entre 3 heures et 5 heures ; potentiel carbone supérieur ou égal à 0,9. Ces conditions permettent notamment d'augmenter le taux d'austénite résiduelle et de la stabiliser thermiquement et mécaniquement.

Pour un renforcement ultérieur optimal des bagues 1, 2, les conditions de l'étape de carbonitruration peuvent être telles qu'à l'issue de celle-ci, le profil de quantité en poids d'azote diminue entre 0,8% et 0,1% dans la zone de surface, le profil d'enrichissement en poids de carbone passant par un maximum inférieur ou égal à 0,4% dans la même profondeur.

Après l'étape de carbonitruration, un mode de réalisation du procédé de renforcement prévoit au moins deux étapes successives de transformation partielle de l'austénite formée en martensite.

Dans un exemple de réalisation :
- la première étape de transformation comprend une trempe de la pièce, notamment réalisée à une température comprise entre 20°C et 240°C, pendant un temps inférieur à 1 heure ;
- la deuxième étape de déstabilisation comprend un traitement par cryogénie, notamment réalisé à une température comprise entre 0°C et -90°C, pendant un temps compris entre 0,5 heure et 1,5 heures.

L'utilisation d'un traitement cryogénique permet de ne déstabiliser qu'une partie de l'austénite, ce qui permet de conserver une quantité suffisante pour combiner dureté et capacité de conserver l'intégrité de la surface. Par conséquent, l'étape de traitement par cryogénie peut être adaptée afin d'obtenir les quantités optimales d'austénite par rapport à la tenue en pollution de bagues 1, 2 de roulement, notamment pour boîtes de vitesses.

A la suite de ces deux étapes de transformation, le procédé de renforcement peut prévoir une étape de défragilisation de la pièce qui peut comprendre un revenu réalisé par exemple à une température inférieure à 250°C pendant un temps compris entre 1 heure et 3 heures.

On donne ci-dessous, un exemple de réalisation du procédé de renforcement d'une bague 1, 2 de boîte de vitesses réalisée en acier 100Cr6 :
- lavage préalable ;
- carbonitruration à 830°C pendant 4 heures, potentiel carbone 1, taux d'ammoniac ajouté 5% ;
- trempe à l'huile à 70°C pendant 30 minutes ;
- lavage ;
- traitement par cryogénie à -30°C pendant 1 heure ;
- lavage ;
- revenu à 170°C pendant 1 heure.

Ensuite, au moins une partie de la zone de surface de la bague issue du procédé de renforcement est rectifiée de sorte à obtenir la géométrie souhaitée.

La demanderesse a établi que sur une zone de surface de la bague 1, 2 d'épaisseur inférieure à 0,5 mm, un profil de quantité en poids d'austénite variant entre 10% et 30% permettait d'obtenir les caractéristiques mécaniques souhaitées pour la bague 1, 2. Un profil de quantité en poids d'austénite variant entre 13% et 25% est particulièrement adapté.

En outre, la bague présente comme caractéristique mécanique avantageuse :
- une dureté Vickers en surface comprise entre 800 et 920 ;
et peut présenter:
- des valeurs de contraintes en compression comprise entre -100 MPa et -350 MPa dans la zone de surface.

Selon l'invention on peut ainsi :
- garantir une dureté élevée tout en conservant une certaine quantité d'austénite ;
- limiter les dégradations superficielles de la bague en cours d'utilisation sous l'effet des contraintes thermiques et mécaniques.
- augmenter la dureté de la bague de manière à créer des défauts de surface dont la géométrie est moins nocive pour la durée de vie ;
- obtenir une structure métallurgique capable « d'amortir » le passage répété de charge sur des indents. Ceci se traduit par l'obtention d'une structure riche en austénite stable thermiquement et mécaniquement car très enrichie en azote et en carbone ;
- avoir des contraintes résiduelles de compression importantes de manière à diminuer la propagation des fissures dans la bague ;
- conserver une aptitude à la mise en forme et tenue en endurance en milieu non pollué au moins égales à celles de la bague non renforcée.

Les tests réalisés sur banc d'essai des roulements selon l'invention montrent, après indentation volontaire de la surface de roulement à l'aide de particules dures, une durée de vie du roulement qui est deux à trois fois supérieure à celle d'un roulement standard de boîte de vitesses.

## Revendications

1. Roulement comprenant une bague intérieure (1), une bague extérieure (2) et des corps roulants (3) disposés dans l'espace formé entre lesdites bagues de sorte à permettre la rotation relative desdites bagues, ledit roulement comprenant en outre au moins une cage (4) comprenant un corps généralement annulaire qui est pourvu de logements (5) dans lesquels les corps roulants (3) sont disposés pour assurer leur guidage en rotation, ledit corps comprenant en outre un déflecteur annulaire (6) s'étendant généralement radialement sur un bord transversal du corps, ledit roulement étant **caractérisé en ce que**, en combinaison :
- la disposition relative du déflecteur (6) et des bagues (1, 2) est prévue pour permettre le passage d'un fluide de lubrification depuis l'extérieur du roulement vers l'espace formé entre les bagues (1, 2) ;
- au moins une bague (1, 2) est réalisée en acier comprenant entre 0,75% et 1,1% en poids de Carbone, ladite bague comprenant une zone de surface d'épaisseur inférieure à 0,5 mm, ladite zone de surface présentant un profil de quantité en poids d'austénite qui varie entre 10% et 30% de sorte à assurer un renforcement de ladite bague, le profil de quantité en poids d'austénite étant obtenu par un procédé de renforcement comprenant une étape de carbonitruration, suivie d'au moins une étape de transformation partielle de l'austénite en martensite comprenant un traitement par cryogénie le procédé de renforcement étant tel que la bague renforcée présente en surface une dureté Vickers comprise entre 800 et 920.

2. Roulement selon la revendication 1, **caractérisé en ce que** la bague intérieure (1) est renforcée.

3. Roulement selon la revendication 1 ou 2, **caractérisé en ce que** la bague extérieure (2) est renforcée.

4. Roulement selon l'une quelconque des revendications 1 à 3, **caractérisé en ce que** la zone de surface de la bague renforcée présente un profil de quantité en poids d'austénite qui varie entre 13% et 25%.

5. Roulement selon l'une quelconque des revendications précédentes, **caractérisé en ce que** la bague renforcée présente des valeurs de contraintes en compression comprises entre -100 MPa et -350 MPa dans la zone de surface.

6. Roulement selon l'une quelconque des revendications précédentes, **caractérisé en ce que** la bague renforcée est réalisée en acier de type 100Cr6.

7. Roulement selon l'une quelconque des revendications précédentes, **caractérisé en ce que** l'étape de transformation comprenant un traitement par cryogénie est réalisée après une étape de transformation comprenant une trempe.

8. Roulement selon l'une quelconque des revendications précédentes, **caractérisé en ce qu'**après le procédé de renforcement, au moins une partie de la surface de la bague subit une rectification.

9. Roulement selon l'une quelconque des revendications précédentes, **caractérisé en ce que** le déflecteur (6) est disposé en regard d'une face latérale de l'espace formée entre les bagues (1, 2).

10. Roulement selon la revendication 9, **caractérisé en ce que** le déflecteur (6) comprend deux lèvres (6a, 6b) qui s'étendent respectivement en regard de chacune des bagues (1, 2).

11. Roulement selon la revendication 10, **caractérisé en ce qu'**au moins une bague (1, 2) comprend un embrèvement (7) dans laquelle une lèvre (6a, 6b) est disposée avec un jeu fonctionnel.

12. Roulement selon la revendication 10 ou 11, **caractérisé en ce qu'**au moins une lèvre (6a, 6b) est disposée en regard de la face latérale d'une bague (1, 2) avec un jeu fonctionnel.

13. Roulement selon l'une quelconque des revendications 9 à 12, **caractérisé en ce qu'**il comprend une cage (4) pourvue d'un déflecteur (6), un joint d'étanchéité (8) étant prévu au niveau de la face latérale de l'espace qui est opposée audit déflecteur.

14. Roulement selon l'une quelconque des revendications 9 à 12, **caractérisé en ce qu'**il comprend deux déflecteurs (6) disposés respectivement en regard de chacune des faces latérales de l'espace formé entre les bagues (1, 2).

15. Roulement selon la revendication 14, **caractérisé en ce qu'**il comprend deux cages (4a, 4b) pourvues chacune d'un déflecteur (6), lesdites cages étant associées entre elles par des moyens d'accrochage réciproque (9).

16. Roulement selon la revendication 15, **caractérisé en ce que** les moyens d'accrochage réciproque comprennent des griffes (9) de forme conique comprenant une partie extrême pourvue d'un chanfrein (9a) de guidage guidant l'appui radial des griffes (9) lors de leur déplacement axial d'encliquetage, et une face d'appui formant une contre dépouille (9b) empêchant de décrochage.

17. Roulement selon l'une quelconque des revendications précédentes, **caractérisé en outre en ce que** le traitement par cryogénie est réalisé à une température comprise entre 0°C et -90°C, pendant un temps compris entre 0,5 heure et 1,5 heures.

## Claims

1. A bearing including an inner ring (1), an outer ring (2) and rolling elements (3) positioned in the space formed between said rings so as to allow the relative rotation of said rings, said bearing further comprising at least one cage (4) comprising a generally annular body which is provided with housings (5) in which the rolling elements (3) are positioned to guide them in rotation, said body further comprising an annular deflector (6) generally extending radially on a transversal edge of the body, said bearing being **characterized in that**, in a combination:
- the relative position of the deflector (6) and the rings (1, 2) is provided for allowing the passage of a lubricant fluid from outside the bearing towards the space formed between the rings (1, 2);
- at least one ring (1, 2) is made of steel comprising between 0.75% and 1.1% by weight of carbon, said ring comprising a surface area having a thickness lower than 0.5mm, said surface area having a profile of amount by weight of austenite which varies between 10% and 30% so as to provide a reinforcement of said ring, the profile of amount by weight of austenite being obtained through a reinforcing process comprising a step of carbonitriding, followed by at least one step of partial transformation of austenite into martensite, comprising a cryogenic treatment, the reinforcing process being such that the reinforced ring has a surface with a Vickers hardness between 800 and 920.

2. A bearing according to claim 1, **characterized in that** the inner ring (1) is reinforced.

3. A bearing according to claim 1 or 2, **characterized in that** the outer ring (2) is reinforced.

4. A bearing according to any one of claims 1 to 3, **characterized in that** the surface area of the reinforced ring has a profile of amount by weight of austenite which varies between 13% and 25%.

5. A bearing according to any one of the preceding claims, **characterized in that** the reinforced ring has values of compression stress between -100MPa and -350MPa, in the surface area.

6. A bearing according to any one of the preceding claims, **characterized in that** the reinforced ring is made of steel of the 100Cr6 type.

7. A bearing according to any one of the preceding claims, **characterized in that** the transformation step comprising a cryogenic treatment is executed after a transformation step including quenching.

8. A bearing according to any one of the preceding claims, **characterized in that**, after the reinforcement process, at least a part of the ring surface undergoes a regrinding.

9. A bearing according to any one of the preceding claims, **characterized in that** the deflector (6) is positioned opposite a side face of the space formed between the rings (1, 2).

10. A bearing according to claim 9, **characterized in that** the deflector (6) includes two lips (6a, 6b) qui extend opposite each of the rings (1, 2), respectively.

11. A bearing according to claim 10, **characterized in that** at least one ring (1, 2) includes a recess (7) in which a lip (6a, 6b) is positioned with an operational clearance.

12. A bearing according to claim 10 or 11, **characterized in that** at least one lip (6a, 6b) is positioned opposite the side face of a ring (1, 2) with an operational clearance.

13. A bearing according to any one of claims 9 to 12, **characterized in that** it includes one cage (4) provided with a deflector (6), a sealing gasket (8) being provided at the side face of the space which is opposite said deflector.

14. A bearing according to any one of claims 9 to 12, **characterized in that** it includes two deflectors (6) positioned respectively opposite each of the side faces of the space formed between the rings (1, 2).

15. A bearing according to claim 14, **characterized in that** it includes two cages (4a, 4b) provided, each, with a deflector (6), said cages being associated together by reciprocal coupling means (9).

16. A bearing according to claim 15, **characterized in that** the reciprocal coupling means comprise conical lugs (9) comprising an end part provided with a guiding bevel (9a), guiding the radial support of the lugs (9) during their axial locking motion, and a supporting face forming an undercut (9b) which prevents the uncoupling.

17. A bearing according to any one of the preceding claims, further **characterized in that** the cryogenic treatment is executed at a temperature between 0°C and -90°C, for a period of time between 0.5hr and 1.5hr.

## Patentansprüche

1. Lager mit einem inneren Ring (1), einem äußeren Ring (2) und Rollkörpern (3), die im zwischen den besagten Ringen gebildeten Raum so angeordnet sind, daß die relative Drehung der besagten Ringe möglich wird, wobei das besagte Lager ferner mindestens einen Käfig (4) umfaßt, der einen im allgemeinen ringförmigen Körper umfaßt, der mit Aufnahmen (5) versehen ist, in denen die Rollkörper (3) so angeordnet sind, daß ihre Führung in Drehung sichergestellt ist, wobei der besagte Körper ferner einen ringförmigen Ablenker (6) umfaßt, der sich im allgemeinen radial auf einem Querrand des Körpers erstreckt, wobei das besagte Lager **dadurch gekennzeichnet ist, daß** in Kombination:
- Die relative Anordnung des Ablenkers (6) und der Ringe (1, 2) so vorgesehen ist, daß der Durchgang eines Schmierfluids von außerhalb des Lagers zum zwischen den besagten Ringen (1, 2) gebildeten Raum möglich ist;
- Mindestens ein Ring (1, 2) aus Stahl ausgeführt ist, der zwischen 0,75% und 1,1% Gewichtsprozent Kohlenstoff enthält, wobei der besagte Ring eine Oberflächenzone mit unter 0,5 mm Dicke umfaßt, wobei die besagte Oberflächenzone ein Mengenprofil des Austenitgewichts aufweist, das zwischen 10% und 30% schwankt, so daß eine Verstärkung des besagten Rings sichergestellt ist, wobei das Mengenprofil des Austenitgewichts durch ein Verstärkungsverfahren erzielt wird, das einen Schritt mit Karbonitrieren umfaßt, auf den mindestens ein Schritt mit teilweiser Umwandlung des Austenits in Martensit folgt, der eine Behandlung mit Kryogenik umfaßt, wobei das Verfahren zur Verstärkung dergestalt ist, daß der verstärkte Ring an der Oberfläche eine Vickers Härte von zwischen 800 und 920 aufweist.

2. Lager nach Anspruch 1, **dadurch gekennzeichnet, daß** der innere Ring (1) verstärkt ist.

3. Lager nach Anspruch 1 oder 2, **dadurch gekennzeichnet, daß** der äußere Ring (2) verstärkt ist.

4. Lager nach einem beliebigen der vorstehenden Ansprüche 1 bis 3, **dadurch gekennzeichnet, daß** die Oberflächenzone des verstärkten Rings ein Mengenprofil des Austenitgewichts aufweist, das zwischen 13% und 25% schwankt.

5. Lager nach einem beliebigen der vorstehenden Ansprüche, **dadurch gekennzeichnet, daß** der verstärkte Ring in der Oberflächenzone Werte der Druckbeanspruchung von zwischen -100 MPa und -350 MPa aufweist.

6. Lager nach einem beliebigen der vorstehenden Ansprüche, **dadurch gekennzeichnet, daß** der verstärkte Ring aus Stahl der Art 100Cr6 ausgeführt ist.

7. Lager nach einem beliebigen der vorstehenden Ansprüche, **dadurch gekennzeichnet, daß** der Schritt der Umwandlung mit einer Behandlung durch Kryogenik nach einem Schritt mit Umwandlung durch eine Härtung ausgeführt wird.

8. Lager nach einem beliebigen der vorstehenden Ansprüche, **dadurch gekennzeichnet, daß** mindestens ein Teil der Ringoberfläche nach dem Schritt mit der Verstärkung geschliffen wird.

9. Lager nach einem beliebigen der vorstehenden Ansprüche, **dadurch gekennzeichnet, daß** der Ablenker (6) vor einer Seitenfläche des zwischen den Ringen (1, 2) gebildeten Raums angeordnet ist.

10. Lager nach Anspruch 9, **dadurch gekennzeichnet, daß** der Ablenker (6) zwei Lippen (6a, 6b) umfaßt, von denen sich jeweils eine vor jedem der Ringe (1, 2) erstreckt.

11. Lager nach Anspruch 10, **dadurch gekennzeichnet, daß** mindestens ein Ring (1, 2) eine Spannfläche (7) umfaßt, in der eine Lippe (6a, 6b) mit einem funktionellen Spiel angeordnet ist.

12. Lager nach Anspruch 10 oder 11, **dadurch gekennzeichnet, daß** mindestens eine Lippe (6a, 6b) vor der Seitenfläche eines Rings (1, 2) mit einem funktionellen Spiel angeordnet ist.

13. Lager nach einem beliebigen der vorstehenden Ansprüche 9 bis 12, **dadurch gekennzeichnet, daß** es einen Käfig (4) umfaßt, der mit einem Ablenker (6) versehen ist, wobei eine Dichtung (8) an der zum besagten Ablenker entgegengesetzten Seitenfläche des Raums vorgesehen ist.

14. Lager nach einem beliebigen der vorstehenden Ansprüche 9 bis 12, **dadurch gekennzeichnet, daß** es zwei Ablenker (6) umfaßt, von denen jeweils einer vor einer der Seitenflächen des zwischen den Ringen (1, 2) gebildeten Raums angeordnet ist.

15. Lager nach Anspruch 14, **dadurch gekennzeichnet, daß** es zwei Käfige (4a, 4b) umfaßt, die jeweils mit einem Ablenker (6) versehen sind, wobei die besagten Käfige durch gegenseitige Anhängemittel (9) miteinander verbunden sind.

16. Lager nach Anspruch 15, **dadurch gekennzeichnet, daß** die gegenseitigen Anhängemittel Krallen (9) im Kegelform mit einem Endteil umfassen, das mit einer Fase (9a) zur Führung versehen ist, die die radiale Auflage der Krallen (9) bei ihrer axialen Einklickbewegung führt, und eine Auflagefläche, die eine Formschräge (9b) bildet, die das Ablösen verhindert.

17. Lager nach einem beliebigen der vorstehenden Ansprüche, ferner **dadurch gekennzeichnet, daß** die Behandlung mit Kryogenik bei einer Temperatur von zwischen 0°C und -90°C während einer Dauer von zwischen 0,5 und 1,5 Stunde ausgeführt wird.
